# EUROPEAN PATENT SPECIFICATION

(11) **EP 2 705 978 B1**
(45) Date of publication and mention of the grant of the patent: **06.11.2019**
(21) Application number: 12183831.2
(22) Date of filing: 11.09.2012
(51) Int. Cl.: B60N 2/015, B60N 2/24

(54) **Vehicle seat spacer arrangement**
Fahrzeugsitzabstandsstückanordnung
Agencement d'espacement de siège de véhicule

(43) Date of publication of application: 12.03.2014
(73) Proprietor: Volvo Car Corporation, 40 531 Göteborg (SE)
(72) Inventor: Jonsson, Tony, 44191 Alingsås (SE)
(74) Representative: Valea AB

(56) References cited:
- EP-A2- 1 464 534
- DE-A1-102007 013 433
- GB-A- 2 473 203
- US-A- 2 097 332
- US-A- 4 267 781
- US-A- 5 490 713
- US-A- 5 895 017
- US-A1- 2002 093 237
- US-B1- 6 299 121

## Description

### TECHNICAL FIELD

The present invention relates to a spacer arrangement for distancing a vehicle seat from a vehicle floor structure.

### BACKGROUND OF THE INVENTION

Throughout a variety of vehicles, platforms and varying models, numerous different vehicle seat implementations are represented. Seats may differ in size and design, they may be arranged in the front or further back of the vehicle; some seats may be adjustable horizontally and vertically and furthermore have the ability to be tilted. Regardless of the variations, vehicle seats share the need for appropriate anchoring with the vehicle floor, or commonly with the vehicle chassis. US629912, for instance, describes a fixing device for mounting a seat part of a seat on a vehicle floor. Although seemingly providing a reliable implementation for anchoring of a seat, the solution suggested does not appear to, in a sufficient manner, target seats intended for relatively high seat positioning. That is, in larger cars such as for instance SUVs (sport utility vehicles), seats are commonly positioned higher up in relation to the vehicle floor as compared to a normal sized car. Accordingly, positioning of for instance a SUV front seat may require an additional structure arranged between the seat and the chassis, for distancing the seat from the floor. For robustness, such distancing structures may be bulky and heavy, and may furthermore require a large number of screws or bolts for fastening to the seat and chassis. With a continuous strive within the automotive sector for reduction of package space as well as number of components required by the implementation, weight thereof and naturally cost, there is a need for the provision of a distancing structure being compact and light-weight.

US 2002/093237 A1, for instance, relates to elevating and angling furniture to assist individuals in standing up from a seated position, and discloses a furniture support system including tapered support members of different heights with broad lower ends and narrow upper ends, wherein each support member has a cavity extending downwardly for receiving the leg of a furniture member. US 5,895,017, moreover, relates to a portable furniture base for attaching a base stand to a floor so that the stand can be moved to various locations. US 5,490,713 on the other hand, relates to an apparatus for vibrating seats, and discloses how when a driver feels drowsiness coming on, the driver can operate controls for turning a vibration generator on and off for vibrating the driver's seat, to thereby prevent the driver from dozing during driving and prevent an accident from occurring. US 2,097,332, furthermore, relates to a shock and vibration absorbing mounting for bus seats whereby the seat can be readily secured to the floor of a bus and which mounting will function to prevent the transmission of vibrations and shocks from the floor to the bus seat.

### SUMMARY OF THE INVENTION

According to the invention, the above need is at least partly met by a spacer arrangement for distancing a vehicle seat from a vehicle floor structure **according to appended independent claim 1.** The spacer arrangement comprises a first and a second spacing element, each having a spacing element seat side adapted to be positioned towards the vehicle seat, and a spacing element floor side adapted to be positioned towards the vehicle floor structure. The first and second spacing elements are of truncated cone or pyramid shape flared from the spacing element seat side towards the spacing element floor side. Furthermore, the first and second spacing elements are adapted to bear weight and loads applied to the vehicle seat.

By arranging a spacer arrangement in accordance with the present invention between a vehicle seat and vehicle floor structure, there is provided a solution to position the vehicle seat at a sufficient height above the vehicle floor. The vehicle seat, hereinafter referred to as seat, may be any seat applicable for the implementation at hand, for instance a driver seat, passenger seat or a seat for a second or perhaps a third row passenger. The seat may for instance be provided with seat rails enabling the seat to be adjusted in a forward and backward manner, but fixed seats are likewise plausible. The vehicle may be of any preferred type, and the vehicle floor structure, hereinafter referred to as floor structure, may be represented by an arbitrary chassis not restricted to any specific platform or model. Furthermore, the spacer arrangement of the present invention may be combined with other structures providing supplementary distancing of the seat from the floor structure. That is, the novel spacer arrangement may for instance be positioned beneath a front portion of a seat, while another distancing structure may be provided beneath a back portion of the seat.

With the introduction of a first and a second spacing element, each having a spacing element seat side adapted to be positioned towards the vehicle seat, and a spacing element floor side adapted to be positioned towards the vehicle floor structure, there are at least two interface positions provided at which the spacer arrangement may interact with the seat as well as floor structure. It should be noted that the spacer arrangement not necessarily needs to directly be adjacent the vehicle seat; there may be one or several intermediate layers, such as for instance seat rails, provided between the spacer arrangement and the vehicle seat. Similarly, the spacer arrangement does not necessarily need to directly be adjacent the vehicle floor structure; there may be one or several intermediate layers, such as any sort of attachment arrangement, provided between the spacer arrangement and the vehicle floor structure.

With the introduction of first and second spacing elements of truncated cone or pyramid shape flared from the spacing element seat side towards the spacing element floor side, the spacing elements are of a shape that may be manufactured in an efficient manner. Furthermore, the truncated cone or pyramid shape may facilitate fixation of for instance a vehicle mat intended to cover the floor structure (and/or intermediate layers and/or vehicle floor). Additionally, the truncated cone or pyramid shape may distribute loads arising from a possible vehicle accident in an efficient manner, independently of direction of such an impact.

A cross-section of the spacing elements truncated cone or pyramid shape may vary, and may for instance be circular or oval, or have other rounded shape. The cross-section may in other implementations be a polygon, multifaceted with at least three sides, although four or more may be beneficial. Furthermore, the body of the spacing element may take on different designs in different embodiments, varying from being solid to hollow. In common, however, is that it is preferred for the body to allow for at least one anchoring member protruding from the floor structure to the seat (or vice versa), to pass through the respective spacing element. Thereby, each respective spacing element not only supports distancing of the seat from the floor structure, but additionally enables for the seat to be attached to the floor structure in a convenient manner. Accordingly, rather than being required to utilize separate screws for fastening the distancing structure with the floor structure and seat, the truncated cone or pyramid shape may enable for the seat to be fastened with the floor structure by means of a single anchoring member penetrating through the respective spacing element. Thereby, assembly may be facilitated, and assembly times along with weight and cost may be reduced. Furthermore, the efficient shape of the truncated cone or pyramid provides reduced package space, and subsequently better foot space for second row passengers should the invention be applied to, for instance, a driver seat.

It should be noted that "truncated cone or pyramid shape" of a spacing element is intended to be interpreted in a broad manner, also including minor deviations. Such a minor deviation may for instance be represented by the spacing element seat side and/or spacing element floor sides being slightly bevelled, subsequently the sides slightly angled, to facilitate for the seat to be arranged with e.g. the front portion higher above the vehicle floor than the back portion. Another such a minor deviation may represent the spacing element envelope wall of one or more of the spacing elements comprising one or several optional cavities adapted for fitting one or several anchoring members, such as screws or bolts. Thereby, supplementary fastening of the spacing element to the seat and/or floor structure may be supported. Yet another such a minor deviation may be represented by one or both of the spacing elements additionally comprising brims with flange like shapes.

Said brims may surround the spacing element seat side and/or the spacing element floor side, to thereby improve stability and strength of the spacing element. The brims may take on varying widths and shapes, and subsequently be adapted to suit the implementation at hand.

Not the least, the present invention furthermore specifies the first and second spacing elements being adapted to bear weight and loads applied to the vehicle seat. Accordingly, with the truncated cone- or pyramid-shaped spacing elements being of sufficient dimensions and material capable of carrying sufficient weight and loads, a light-weight, space efficient spacer arrangement for distancing the seat from the floor structure is provided.

The spacing elements may be manufactured from any kind of suitable material such as concrete, metals such as steel, or iron. A preferred selection of suitable materials are light-weight materials, whereby according to an embodiment, the first and/or the second spacing element comprises a light-weight material, such as one or more of the materials selected from the list of: aluminum, magnesium based alloys, polymeric materials such as composites, reinforced polymeric material, e.g. carbon reinforced fiber polymeric material. Thereby, provided that suitable dimension of the spacing elements are selected, spacing elements of light-weight material may have sufficient load-bearing characteristics required for carrying weight and loads applied to the vehicle seat. It should be noted that other sections of the spacer arrangement likewise may comprise such light-weight material(s).

According to another embodiment, the first and/or the second spacing element has a spacing element height stretching from the spacing element seat side to the spacing element floor side. The spacing element height ranges from 10 mm to 150 mm, and preferably from 60 to 100 mm. With the suggested former, broader height span, the spacing elements may be of height dimensions suitable for a variety of vehicle types, platforms, models and seats. With the suggested latter, narrower height span, seat heights suitable for e.g. vehicles such as SUVs (Sport Utility Vehicles) may be targeted for implementation. The respective spacing elements may furthermore be of different heights, should such an implementation be suitable for the implementation at hand. A spacing element positioned beneath a front portion of a seat may, for instance, be of greater height than a spacing element positioned beneath a back portion.

According to one embodiment, the spacing element seat side is circular, and an outer spacing element seat diameter of the spacing element seat side ranges from 15 to 80 mm, and preferably from 30 to 60 mm. By outer spacing element seat diameter is here meant the outer edge perimeter diameter of the spacing element side facing the seat. According to another embodiment, the spacing element floor side is circular, and an outer spacing element floor diameter of the spacing element floor side ranges from 20 to 100 mm, and preferably from 40 to 80 mm. By outer spacing element floor diameter is here meant the outer edge perimeter diameter of the spacing element side facing the floor structure. With the suggested diameter spans, the spacing element seat side, as well as the spacing element floor side, may be of appropriate dimensions in view of for instance load-bearing characteristics versus weight of the spacing element. It should be noted that the outer spacing element seat and floor sides being defined as "circular" should be interpreted in a broad manner, likewise including "almost circular" and "close to circular".

As previously mentioned, each spacing element may additionally comprise a brim with a flange like shape surrounding the spacing element seat side and/or the spacing element floor side. It should be noted that such a brim, in this context, is not to be considered comprised in above mentioned outer spacing element seat diameter and/or outer spacing element floor diameter.

According to yet another embodiment, at least one of said first and second spacing elements is monolithic, comprising a spacing element envelope wall defining a tubular void adapted for encompassing an anchoring member. Thereby, a solid spacing element is presented, which may be manufactured in a convenient manner. Such a monolithic spacing element may preferably, although not necessarily, be of a plastic material, in order to keep weight down. The tubular void may take on different forms, and may for instance be adapted to loosely encompass the anchoring member, e.g. screw or bolt. Alternatively, the tubular void may be adapted to encompass the anchoring member in a tight manner. Thereby, there is provided a spacing element supporting screw pre-tension loads, with a straight efficient load path in tension and compression, and in horizontal loads arising from, for instance, a possible vehicle accident. The tubular void may further be threaded, to thereby provide additional engagement of the anchoring member with the spacing element.

In order to enable for further weight reduction, the spacing elements may be designed to be hollow. Consequently, according to one embodiment, a spacing element thickness of a spacing element envelope wall of the first and/or second spacing element ranges from 1 to 8 mm, and preferably from 1.5 to 5 mm. With the suggested thickness spans, the spacing element envelope walls may be of appropriate dimensions in view of load-bearing characteristics versus weight of the spacing element. The spacing element thickness may be constant along the perimeter and height of the spacing element, although likewise plausible, is an envelope wall thickness varying along the envelope surface.

According to one embodiment, at least one of the spacing elements comprises a tubular support element centrally arranged inside the corresponding spacing element. Furthermore, the tubular support element has a tubular support element seat side adapted to be positioned towards the vehicle seat and a tubular support element floor side adapted to be positioned towards the vehicle floor structure. The tubular support element is adapted to bear weight and loads applied to the vehicle seat. With the introduction of a tubular support element centrally arranged inside a spacing element, additional supporting structures for distancing the seat from the floor structure is provided. By arranging each tubular support element centrally, consideration is given to symmetry. It should be noted, however, that "centrally arranged" is intended to be interpreted in a broad manner, likewise including "almost centrally arranged" and "close to centrally arranged".

Since each tubular support element has a tubular support element seat side adapted to be positioned towards the seat and a tubular support element floor side adapted to be positioned towards the floor structure, the tubular support elements may interact with the seat as well as floor structure. It should be noted that the tubular support elements not necessarily are directly adjacent the vehicle seat, there may be one or several intermediate layers, such as for instance seat rails, provided between each tubular support element and the seat. Similarly, the tubular support elements are not necessarily directly adjacent the floor structure, there may be one or several intermediate layers, such as an attachment arrangement, provided between each tubular support element and the floor structure. Furthermore, the tubular support element seat side and/or tubular support element floor side may be slightly bevelled, subsequently the sides slightly angled. Additionally, the tubular support element seat side may be in level with the corresponding spacing element seat side, and the tubular support element floor side is in level with the corresponding spacing element floor side. Thereby, the design of the spacer arrangement may be simplified.

Furthermore, the tubular support elements may comprise a light-weight material, such as one or a combination of those suggested in the foregoing in conjunction with the spacing elements, and each may be of the same material as the corresponding spacing element. Alternatively, the tubular support elements may comprise material differing from the material of the corresponding spacing element, whereby the different material characteristics may provide a desirable combination. That is, a spacing element of for instance a light-weight composite material, and a corresponding tubular support element of metal, may be an efficient hybrid solution which may strengthen the design.

Furthermore, the respective tubular support elements may take on different forms, and may for instance be adapted to loosely encompass an anchoring member, e.g. screw or bolt. Alternatively, the respective tubular support elements may be adapted to encompass an anchoring member in a tight manner. Thereby, there is provided a tubular support element which along with the corresponding spacing element support screw pre-tension loads, with a straight efficient load path in tension and compression, and in horizontal loads arising from, for instance, a possible vehicle accident. The tubular support element may further be threaded to thereby provide additional engagement of an anchoring member with the tubular support element.

Optionally, one or more of the tubular support elements may comprise additional brims with flange like shapes. Such brims may surround the tubular support element seat side and/or the tubular support element floor side, to thereby improve stability and strength of the tubular support element. The brims may take on varying widths and shapes, and subsequently be designed to suit the implementation at hand.

Not the least, with the first and second tubular support elements furthermore adapted to bear weight and loads applied to the vehicle seat, i.e. with the first and second tubular support elements being of sufficient dimensions and material, the tubular support elements may assist the spacing elements in carrying weight and loads in an efficient manner.

According to a further embodiment, at least one of the spacing elements and the corresponding tubular support element are formed in one unitary piece of material. Thereby, a spacing element and a tubular support element is represented by a single part rather than two separate parts, which may make handling as well as assembly more convenient. The spacing element and the tubular support element may, for instance, be integrated in that the level of the spacing element seat side coincides with the tubular support element seat side, with the spacing element seat side comprising the tubular support element seat side. According to another example, forming of the first tubular support element and the first spacing element in one unitary piece of material may be accomplished by the spacing element floor side comprising the tubular support element floor side.

According to yet another embodiment, an outer tubular support element diameter of the tubular support element ranges from 6 to 90 mm, and preferably from 20 to 60 mm. By outer tubular support element diameter is here meant the diameter of an outer tubular support element envelope wall. According to still another embodiment, a tubular support element thickness of a tubular support element envelope wall of the tubular support element ranges from 1 to 20 mm, and preferably from 3 to 10 mm. With the suggested diameter and thickness spans, the tubular support element seat and floor sides, as well as tubular support element envelope wall, may be of adequate dimensions in view of for instance load-bearing characteristics versus weight of the tubular support element. The suggested spans are furthermore adequate for an anchoring member to be encompassed. The tubular support element thickness may be constant along the perimeter and height of the tubular support element, or alternatively, vary along the envelope surface.

According to one embodiment, the spacer arrangement further comprises a primary reinforcing segment arranged between the first and second spacing elements. Thereby, the first and second spacing elements may be connected with each other, and the spacer arrangement be represented by a single part rather than two separate. Accordingly, handling as well as assembly of the spacer arrangement may be more convenient. It should be emphasized that the floor structure in itself, in this context, not is to be considered to be such a reinforcing segment. The primary reinforcing segment is preferably stiff, whereby additional strength is provided to the spacer arrangement. To provide a robust solution, the primary reinforcing segment is for instance represented by a beam. Notably, reinforcing segments may be utilized for the convenience of various surrounding equipment, such as fastening of a piece of equipment to a reinforcing segment.

According to another embodiment, the spacer arrangement further comprises at least a third spacing element and a fourth spacing element. Thereby, weight and loads applied to the seat may be distributed to the spacing elements in a suitable manner. For instance, two of the spacing elements may be arranged at positions corresponding to the front portion of the seat, and two other spacing elements at positions corresponding to the back portion. Furthermore, the front spacing elements may be of greater height than the height of the back spacing elements. Thereby, the at least four spacing elements may facilitate for a seat to be arranged slightly angled, subsequently supporting improved seat comfort.

According to yet another embodiment, the spacer arrangement further comprises a secondary reinforcing segment arranged between the first and third spacing elements, and/or a tertiary reinforcing segment arranged between the second and fourth spacing elements. Thereby, the first and third and/or second and fourth spacing elements may be connected with each other, whereby the spacer arrangement may be represented by a single or few parts rather than a plurality thereof. Accordingly, handling as well as assembly of the spacer arrangement may be more convenient. According to still another embodiment, the spacer arrangement further comprises one or several additional reinforcing segments arranged between the secondary and tertiary reinforcing segments.

As the secondary and/or tertiary reinforcing segments as well as the additional reinforcing segments are to be interpreted as similar or even identical to above mentioned primary reinforcing segment, similar advantages as those mentioned in conjunction with the primary reinforcing segment correspondingly apply.

### BRIEF DESCRIPTION OF THE DRAWINGS

The various aspects of the non-limiting embodiments of the invention, including particular features and advantages, will be readily understood from the following detailed description and the accompanying drawings, in which:
Fig. 1 illustrates an exemplifying spacer arrangement according to a first embodiment of the invention, for distancing a vehicle seat from a vehicle floor structure;
Fig. 2 shows the spacer arrangement of Fig. 1 in greater detail;
Fig. 3 shows a cross-section view of an exemplifying spacing element comprised in the spacer arrangement of Fig. 1; and
Fig.4 illustrates a spacing element according to a second embodiment of the invention.

### DETAILED DESCRIPTION OF PREFERRED EMBODIMENTS

The non-limiting embodiments of the present invention will now be described more fully hereinafter with reference to the accompanying drawings, in which currently preferred embodiments of the invention are shown. This invention may, however, be embodied in many different forms and should not be construed as limited to the embodiments set forth herein. Like reference characters refer to like elements throughout.

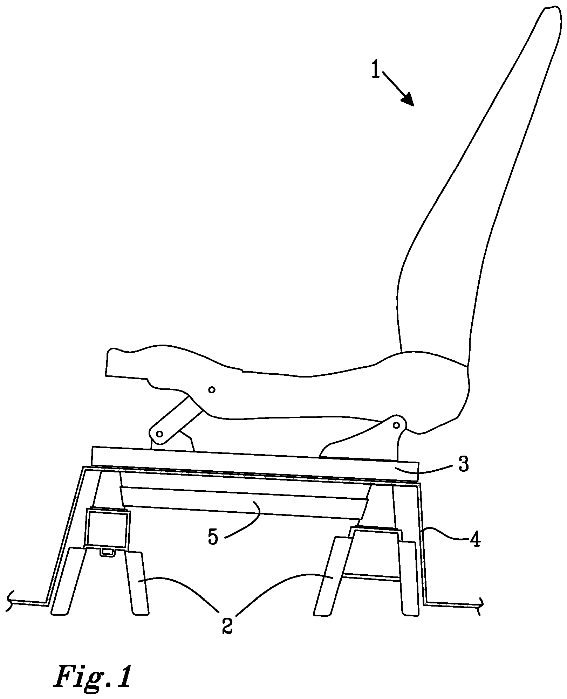

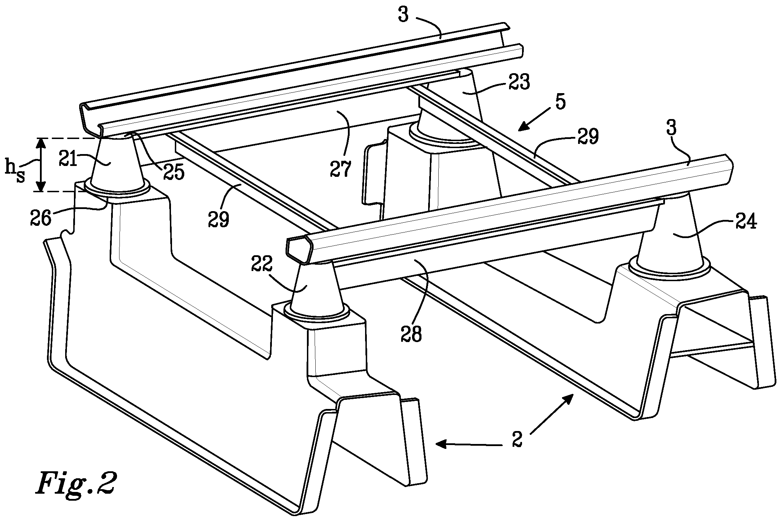

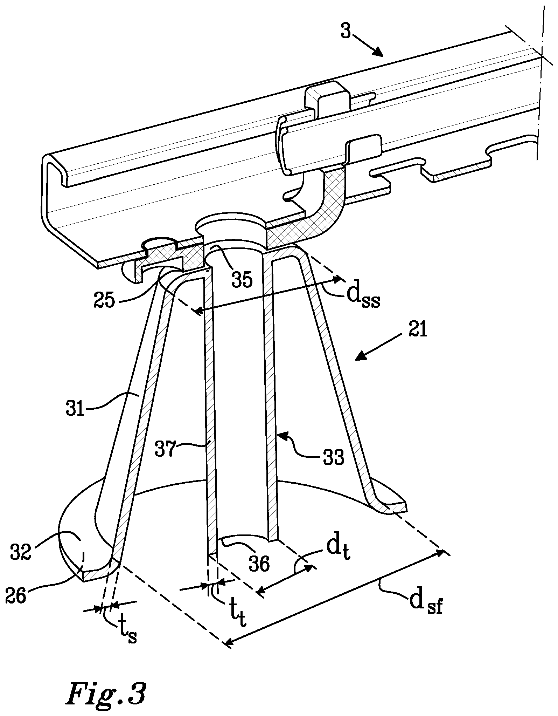

Referring now to the figures and Fig. 1 in particular, there is provided an exemplifying vehicle seat 1 and a corresponding vehicle floor structure 2, for instance vehicle chassis, onto which the seat 1 is to be arranged. The seat 1 is here provided with seat rails 3, for enabling the seat 1 to be adjustable in a forward and backward direction. Furthermore, the seat 1 is here a driver seat intended for a SUV, whereby the seat 1 is to be placed relatively high above the vehicle floor. Covering the floor structure 2 is a vehicle mat 4. In order to provide distancing of the seat 1 from the floor structure 2, an exemplifying spacer arrangement 5 according to a first embodiment is arranged between the seat 1, or more specifically the seat rails 3, and the floor structure 2. Specifics with regards to the spacer arrangement 5 will be provided with reference to Figs. 2 and 3.

Fig. 2 shows the spacer arrangement 5 of Fig. 1 in greater detail, arranged between the seat rails 3 and the floor structure 2. The spacer arrangement 5 here comprises a first spacing element 21, a second spacing element 22, a third spacing element 23 and a fourth spacing element 24. Although dimensions of the respective spacing elements 21, 22, 23, 24 may vary, the characteristics of the respective spacing elements 21, 22, 23, 24 are similar or even identical, whereby a detailed description is solely given of the first spacing element 21. Accordingly, the first spacing element 21 has a spacing element seat side 25 adapted to be positioned towards the seat 1, or here rather the seat rails 3, and a spacing element floor side 26 adapted to be positioned towards the floor structure 2. The first spacing element 21 is of truncated cone shape flared from the spacing element seat side 25 towards the spacing element floor side 26. The first spacing element 21 is preferably, although not necessarily, manufactured of a light-weight material, and is in this exemplifying first embodiment manufactured from a magnesium based alloy. Furthermore, the first spacing element 21 is adapted to bear weight and loads applied to the seat 1, whereby the first spacing element 21 needs to take on suitable characteristics. Accordingly, the first spacing element 21 has a spacing element height hₛ stretching from the spacing element seat side 25 to the spacing element floor side 26. The spacing element height hₛ is here in the range of 60-100 mm, accordingly adapted for implementation in, for instance, a SUV. It should be noted that the spacing elements 21, 22, 23, 24 may be of different heights compared to each other depending on the implementation at hand; here, the first and second spacing elements 21, 22 are of height hₛ while third and fourth spacing elements 23, 24 are of a different height.

The exemplifying spacer arrangement 5 of this first embodiment further comprises an optional secondary reinforcing segment 27 arranged between the first and third spacing elements 21, 23, and an optional tertiary reinforcing segment 28 arranged between the second and fourth spacing elements 22, 24. Here, the reinforcing segments 27, 28 are shaped as beams. Additionally, the spacer arrangement 5 further comprises two optional additional reinforcing segments 29 arranged between the secondary and tertiary reinforcing segments 29.

Fig. 3 shows a cross-section view of the exemplifying first spacing element 21 of the first embodiment provided beneath the seat rail 3. The spacing element seat side 25 is here circular, and has an outer spacing element seat diameter dₛₛ, which preferably, although not necessarily, is in the range of 30 to 60 mm. Furthermore, the spacing element floor side 26 has an outer spacing element floor diameter d_{sf}, here in the range of 40 to 80 mm. The first spacing element 5 has a spacing element envelope wall 31, which envelope wall has a thickness tₛ here ranging from 1.5 to 5 mm. The spacing element thickness tₛ is here constant along the spacing element envelope wall 31 throughout the height hₛ of the spacing element. In this exemplifying first embodiment, the first spacing element 21 additionally comprises an optional brim 32 with a flange like shape. The brim 32 is here an integrated section of the first spacing element 21, formed to encircle the spacing element floor side 26.

Accordingly, this first embodiment of the present invention presents a light-weight, space efficient spacer arrangement 5 for distancing the seat 1 from the floor structure 2, which spacer arrangement 5 comprises truncated cone-shaped spacing elements 21, 22, 23, 24 having sufficient characteristics to carry weight and loads applied to the seat 1.

The first spacing element 21 of the first embodiment additionally comprises an optional first tubular support element 33 centrally arranged inside the first spacing element 21. Here, the first spacing element 21 and the first tubular support element 33 are adapted for encompassing a single anchoring member, e.g. a relatively long screw or bolt. The first tubular support element 33 has a tubular support element seat side 35 adapted to be positioned towards the seat 1, here seat rail 3, and a tubular support element floor side 36 adapted to be positioned towards the floor structure 2. The tubular support element 33 is furthermore adapted to bear weight and loads applied to the seat 1. Accordingly, the tubular support element 33 needs to take on adequate characteristics, whereby the tubular support element seat side 35 here is in level with the corresponding spacing element seat side 25, and the tubular support element floor side 36 in level with the corresponding spacing element floor side 26. According to this first embodiment, the first spacing element 21 and the first tubular support element 33 are formed in one unitary piece of material, here a magnesium based alloy. The integration of the first tubular support element 33 with the first spacing element 21 is here accomplished in that the tubular support element seat side 35 is comprised in the spacing element seat side 25. An outer tubular support element diameter dₜ of the first tubular support element 33 is in the range of 20 to 60 mm. Additionally, a tubular support element thickness tₜ of a tubular support element envelope wall 37 of the first tubular support element 33 here ranges from 3 to 10 mm. Thereby, the first tubular support element 33 has sufficient characteristics to assist the first spacing element 21 in carrying weight and loads applied to the seat 1.

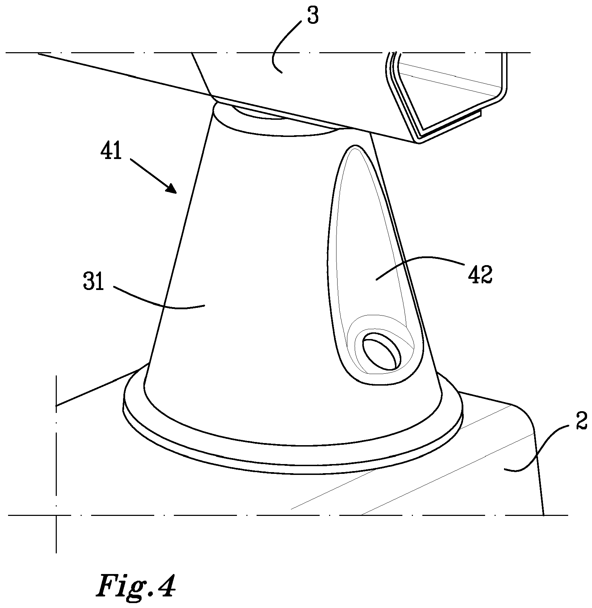

Fig. 4 illustrates a spacing element 41 according to a second embodiment of the invention. This alternative spacing element 41 allows for an additional anchoring member to pass through the spacing element wall 31, to thereby provide for additional fastening to the floor structure 2. Accordingly, the spacing element wall 31 according to this second embodiment comprises a cavity 42 adapted for fitting such an additional anchoring member, e.g. a screw or bolt.

The person skilled in the art realizes that the present invention by no means is limited to the preferred embodiments described above. On the contrary, many modifications and variations are possible within the scope of the appended claims. It should furthermore be noted that the drawings not necessarily are to scale and the dimensions of certain features may have been exaggerated for the sake of clarity. Emphasis is instead placed upon illustrating the principle of the embodiments herein. Additionally, in the claims, the word "comprising" does not exclude other elements or steps, and the indefinite article "a" or "an" does not exclude a plurality.

## Claims

1. An arrangement comprising a vehicle seat (1) and a spacer arrangement (5) for distancing said vehicle seat (1) from a vehicle floor structure (2), said spacer arrangement (5) comprising a first and a second spacing element (21, 22) and further at least a third and a fourth spacing element (23, 24), each having a spacing element seat side (25) positioned towards said vehicle seat (1), and a spacing element floor side (26) positioned towards said vehicle floor structure (2), said spacing elements (21, 22, 23, 24) being of truncated cone or pyramid shape flared from said spacing element seat side (25) towards said spacing element floor side (26), wherein said spacing elements (21, 22, 23, 24) are adapted to bear weight and loads applied to said vehicle seat (1) and further distancing said vehicle seat (1) from said vehicle floor structure (2), wherein at least one of the spacing elements (21, 22, 23, 24) comprises a tubular support element (33) centrally arranged inside the corresponding spacing element (21, 22, 23, 24), said tubular support element (33) having a tubular support element seat side (35) positioned towards said vehicle seat (1) and a tubular support element floor side (36) positioned towards said vehicle floor structure (2), wherein said tubular support element (33) is adapted to bear weight and loads applied to said vehicle seat (1), said first, second, third and/or fourth spacing element (21, 22, 23, 24) encompassing at least one anchoring member such that said anchoring member is allowed to protrude from said vehicle floor structure (2) to said vehicle seat (1) or vice versa, said first, second, third and/or fourth spacing element (21, 22, 23, 24) encompassing said anchoring member in a tight manner.

2. The arrangement in accordance with claim 1, wherein said first and/or said second spacing element (21, 22) comprises a light-weight material, such as one or more of the materials selected from the list of: aluminum, magnesium based alloys, polymeric materials such as composites, reinforced polymeric material, e.g. carbon reinforced fiber polymeric material.

3. The arrangement in accordance with claim 1 or 2, wherein said first and/or said second spacing element (21, 22) has a spacing element height (hₛ) stretching from said spacing element seat side (25) to said spacing element floor side (26), said spacing element height hₛ ranging from 10 mm to 150 mm, and preferably from 60 to 100 mm.

4. The arrangement in accordance with any one of the preceding claims, wherein said spacing element seat side (25) is circular, and an outer spacing element seat diameter (dₛₛ) of said spacing element seat side (25) ranges from 15 to 80 mm, and preferably from 30 to 60 mm.

5. The arrangement in accordance with any one of the preceding claims, wherein said spacing element floor side (26) is circular, and an outer spacing element floor diameter (d_{sf}) of said spacing element floor side (26) ranges from 20 to 100 mm, and preferably from 40 to 80 mm.

6. The arrangement in accordance with any one of the preceding claims, wherein at least one of said first and/or second spacing elements (21, 22) is monolithic, comprising a spacing element envelope wall (31) defining a tubular void adapted for encompassing an anchoring member.

7. The arrangement in accordance with claim 6, wherein a spacing element thickness (tₛ) of a spacing element envelope wall (31) of said first and/or second spacing element (21, 22) ranges from 1 to 8 mm, and preferably from 1.5 to 5 mm.

8. The arrangement in accordance with claim 7, wherein at least one of the spacing elements (21, 22, 23, 24) and corresponding said tubular support element (33) are formed in one unitary piece of material.

9. The arrangement in accordance with claim 7 or 8, wherein an outer tubular support element diameter (dₜ) of said tubular support element (33) ranges from 6 to 90 mm, and preferably from 20 to 60 mm.

10. The arrangement in accordance with claim 8 or 9, wherein a tubular support element thickness (tₜ) of a tubular support element envelope wall (37) of said tubular support element (33) ranges from 1 to 20 mm, and preferably from 3 to 10 mm.

11. The arrangement in accordance with any one of the preceding claims, wherein said spacer arrangement (5) further comprises a primary reinforcing segment arranged between said first and second spacing elements (21, 22).

12. The arrangement in accordance with claim 11, wherein said spacer arrangement (5) further comprises a secondary reinforcing segment (27) arranged between said first and third spacing elements (21, 23) and/or a tertiary reinforcing segment (28) arranged between said second and fourth spacing elements (22, 24).

13. The arrangement in accordance with claim 12, wherein said spacer arrangement (5) further comprises one or several additional reinforcing segments (29) arranged between said secondary and tertiary reinforcing segments (27, 28).

## Patentansprüche

1. Anordnung, einen Fahrzeugsitz (1) und eine Abstandsstückanordnung (5) zum beabstanden des Fahrzeugsitzes (1) von einer Fahrzeugbodenstruktur (2) umfassend, wobei die Abstandsstückanordnung (5) ein erstes und zweites Abstandsstückelement (21, 22) und ferner mindestens ein drittes und viertes Abstandsstückelement (23, 24) umfasst, wobei jedes eine Abstandsstückelementsitzseite (25), die in Richtung des Sitzes (1) positioniert ist, und eine Abstandsstückelementbodenseite (26), die in Richtung der Fahrzeugbodenstruktur (2) positioniert ist, aufweist, wobei die Abstandsstückelemente (21, 22, 23, 24) kegelstumpf- oder pyramidenstumpfförmig und von der Abstandsstückelementsitzseite (25) in Richtung der Abstandsstückelementbodenseite (26) aufgeweitet sind, wobei die Abstandsstückelemente (21, 22, 23, 24) dazu eingerichtet sind, auf den Fahrzeugsitz (1) aufgewendetes Gewicht und Lasten aufzunehmen und ferner den Fahrzeugsitz (1) von der Fahrzeugbodenstruktur (2) beabstanden, wobei mindestens eins der Abstandsstückelemente (21, 22, 23, 24) ein rohrförmiges Trägerelement (33) umfasst, das mittig im zugehörigen Abstandsstückelement (21, 22, 23, 24) angeordnet ist, wobei das rohrförmige Trägerelement (33) eine rohrförmige Trägerelementsitzseite (35), die in Richtung des Fahrzeugsitzes (1) positioniert ist, und eine rohrförmige Trägerelementbodenseite (36), die in Richtung der Fahrzeugbodenstruktur (2) positioniert ist, aufweist, wobei das rohrförmige Trägerelement (33) dazu eingerichtet ist, auf den Sitz (1) aufgebrachtes Gewicht und Lasten aufzunehmen, wobei das erste, zweite, dritte und/oder vierte Abstandsstückelement (21, 22, 23, 24) mindestens ein Ankerelement umgibt, sodass das Ankerelement aus der Fahrzeugbodenstruktur (2) zum Fahrzeugsitz (1) oder umgekehrt vorstehen kann, wobei das erste, zweite, dritte und/oder vierte Abstandsstückelement (21, 22, 23, 24) das Ankerelement fest umgibt.

2. Anordnung nach Anspruch 1, wobei das erste und/oder zweite Abstandsstückelement (21, 22) ein leichtes Material umfasst, zum Beispiel ein oder mehrere Materialen, die aus der folgenden Liste ausgewählt sind: Aluminium, Legierungen auf Magnesiumbasis, Polymermaterialien wie Verbundstoffe, verstärktes Polymermaterial, z. B. kohlenstofffaserverstärktes Polymermaterial.

3. Anordnung nach Anspruch 1 oder 2, wobei das erste und/oder zweite Abstandsstückelement (21, 22) eine Abstandsstückelementhöhe (hₛ) aufweist, die sich von der Abstandsstückelementsitzseite (25) zur Abstandsstückelementbodenseite (26) erstreckt, wobei die Abstandsstückelementhöhe hₛ zwischen 10 mm und 150 mm, vorzugsweise zwischen 60 und 100 mm beträgt.

4. Anordnung nach einem der vorstehenden Ansprüche, wobei die Abstandsstückelementsitzseite (25) rund ist und der Abstandsstückelementsitzaußendurchmesser (dₛₛ) der Abstandsstückelementsitzseite (25) zwischen 15 und 80 mm und vorzugsweise zwischen 30 und 60 mm beträgt.

5. Anordnung nach einem der vorstehenden Ansprüche, wobei die Abstandsstückelementbodenseite (26) rund ist und der Abstandsstückelementbodenaußendurchmesser (d_{sf}) der Abstandsstückelementbodenseite (26) zwischen 20 und 100 mm und vorzugsweise zwischen 40 und 80 mm beträgt.

6. Anordnung nach einem der vorstehenden Ansprüche, wobei mindestens das erste und/oder zweite Abstandsstückelement (21, 22) einstückig ist und eine Abstandsstückelementumgebungswand (31) umfasst, die ein rohrförmiges Loch definiert, das dazu eingerichtet ist, ein Ankerelement zu umgeben.

7. Anordnung nach Anspruch 6, wobei eine Abstandsstückelementstärke (tₛ) der Abstandsstückelementumgebungswand (31) des ersten und/oder zweiten Abstandsstückelements (21, 22) zwischen 1 und 8 mm und vorzugsweise zwischen 1,5 und 5 mm beträgt.

8. Anordnung nach Anspruch 7, wobei mindestens eins der Abstandsstückelemente (21, 22, 23, 24) und des zugehörigen rohrförmigen Trageelements (33) als einstückiges Stück Metall ausgebildet sind.

9. Anordnung nach Anspruch 7 oder 8, wobei ein Außendurchmesser (dₜ) des rohrförmigen Trägerelements des rohrförmigen Trägerelements (33) zwischen 6 und 90 mm und vorzugsweise zwischen 20 und 60 mm beträgt.

10. Anordnung nach Anspruch 8 oder 9, wobei eine Stärke (tₜ) des rohrförmigen Trägerelements einer Umgebungswand (37) des rohrförmigen Trägerelements des rohrförmigen Trägerelements (33) zwischen 1 und 20 mm und vorzugsweise zwischen 3 und 10 mm beträgt.

11. Anordnung nach einem der vorstehenden Ansprüche, wobei die Abstandsstückanordnung (5) ferner ein primäres Verstärkungssegment umfasst, das zwischen dem ersten und zweiten Abstandsstückelement (21, 22) angeordnet ist.

12. Anordnung nach Anspruch 11, wobei die Abstandsstückanordnung (5) ferner ein sekundäres Verstärkungssegment (27), das zwischen dem ersten und dritten Abstandsstückelement (21, 23) angeordnet ist und/oder ein tertiäres Verstärkungssegment (28), das zwischen dem zweiten und vierten Abstandsstückelement (22, 24) angeordnet ist, umfasst.

13. Anordnung nach Anspruch 12, wobei die Abstandsstückanordnung (5) ferner ein oder mehrere zusätzliche Verstärkungssegmente (29) umfasst, die zwischen dem sekundären und tertiären Verstärkungssegment (27, 28) angeordnet sind.

## Revendications

1. Agencement comprenant un siège de véhicule (1) et un agencement d'espacement (5) pour espacer ledit siège de véhicule (1) d'une structure de plancher de véhicule (2), ledit agencement d'espacement (5) comprenant un premier et un deuxième élément d'espacement (21, 22) et en outre au moins un troisième et un quatrième élément d'espacement (23, 24), chacun ayant un côté de siège d'élément d'espacement (25) positionné vers ledit siège de véhicule (1) et un côté de plancher d'élément d'espacement (26) positionné vers ladite structure de plancher de véhicule (2), lesdits éléments d'espacement (21, 22, 23, 24) ayant une forme tronconique ou pyramidale évasée à partir dudit côté de siège d'élément d'espacement (25) vers ledit côté de plancher d'élément d'espacement (26), lesdits éléments d'espacement (21, 22, 23, 24) étant prévus pour supporter le poids et les charges appliquées audit siège de véhicule (1) et espaçant en outre ledit siège de véhicule (1) de ladite structure de plancher de véhicule (2), au moins l'un des éléments d'espacement (21, 22, 23, 24) comprenant un élément de support tubulaire (33) disposé centralement à l'intérieur de l'élément d'espacement correspondant (21, 22, 23, 24), ledit élément de support tubulaire (33) ayant un côté de siège d'élément de support tubulaire (35) positionné vers ledit siège de véhicule (1) et un côté de plancher d'élément de support tubulaire (36) positionné vers ladite structure de plancher de véhicule (2), ledit élément de support tubulaire (33) étant prévu pour supporter le poids et les charges appliquées audit siège de véhicule (1), lesdits premier, deuxième, troisième et/ou quatrième éléments d'espacement (21, 22, 23, 24) entourant au moins un organe d'ancrage de telle sorte que ledit organe d'ancrage puisse faire saillie depuis ladite structure de plancher de véhicule (2) vers ledit siège de véhicule (1) ou vice versa, lesdits premier, deuxième, troisième et/ou quatrième éléments d'espacement (21, 22, 23, 24) entourant étroitement ledit organe d'ancrage.

2. Agencement selon la revendication 1, dans lequel lesdits premier et/ou deuxième éléments d'espacement (21, 22) comprennent un matériau de poids léger, tel qu'un ou plusieurs parmi les matériaux choisis dans la liste comprenant : l'aluminium, les alliages à base de magnésium, des matériaux polymères tels que des composites, un matériau polymère renforcé, par exemple un matériau polymère fibreux renforcé par des fibres de carbone.

3. Agencement selon la revendication 1 ou 2, dans lequel lesdits premier et/ou deuxième éléments d'espacement (21, 22) présentent une hauteur d'élément d'espacement (hₛ) s'étendant depuis ledit côté de siège d'élément d'espacement (25) jusqu'audit côté de plancher d'élément d'espacement (26), ladite hauteur d'élément d'espacement hₛ étant comprise entre 10 mm et 150 mm, et de préférence entre 60 et 100 mm.

4. Agencement selon l'une quelconque des revendications précédentes, dans lequel ledit côté de siège d'élément d'espacement (25) est circulaire, et un diamètre (dₛₛ) de siège d'élément d'espacement extérieur dudit côté de siège d'élément d'espacement (25) est compris entre 15 et 80 mm, et de préférence entre 30 et 60 mm.

5. Agencement selon l'une quelconque des revendications précédentes, dans lequel ledit côté de plancher d'élément d'espacement (26) est circulaire et un diamètre (d_{sf}) de plancher d'élément d'espacement extérieur dudit côté de plancher d'élément d'espacement (26) est compris entre 20 et 100 mm, de préférence entre 40 et 80 mm.

6. Agencement selon l'une quelconque des revendications précédentes, dans lequel au moins l'un desdits premier et/ou deuxième éléments d'espacement (21, 22) est monolithique, comprenant une paroi d'enveloppe d'élément d'espacement (31) définissant un vide tubulaire prévu pour entourer un organe d'ancrage.

7. Agencement selon la revendication 6, dans lequel une épaisseur d'élément d'espacement (tₛ) d'une paroi d'enveloppe d'élément d'espacement (31) desdits premier et/ou deuxième éléments d'espacement (21, 22) est comprise entre 1 et 8 mm, de préférence entre 1,5 et 5 mm.

8. Agencement selon la revendication 7, dans lequel au moins l'un des éléments d'espacement (21, 22, 23, 24) et dudit élément de support tubulaire correspondant (33) sont formés sous forme d'une pièce unitaire de matériau.

9. Agencement selon la revendication 7 ou 8, dans lequel un diamètre (dₜ) d'élément de support tubulaire extérieur dudit élément de support tubulaire (33) est compris entre 6 et 90 mm, de préférence entre 20 et 60 mm.

10. Agencement selon la revendication 8 ou 9, dans lequel une épaisseur d'élément de support tubulaire (tₜ) d'une paroi d'enveloppe d'élément de support tubulaire (37) dudit élément de support tubulaire (33) est comprise entre 1 et 20 mm, de préférence entre 3 et 10 mm.

11. Agencement selon l'une quelconque des revendications précédentes, dans lequel ledit agencement d'espacement (5) comprend en outre un segment de renforcement primaire disposé entre lesdits premier et deuxième éléments d'espacement (21, 22).

12. Agencement selon la revendication 11, dans lequel ledit agencement d'espacement (5) comprend en outre un segment de renforcement secondaire (27) disposé entre lesdits premier et troisième éléments d'espacement (21, 23) et/ou un segment de renforcement tertiaire (28) disposé entre lesdits deuxième et quatrième éléments d'espacement (22, 24) .

13. Agencement selon la revendication 12, dans lequel ledit agencement d'espacement (5) comprend en outre un ou plusieurs segments de renforcement supplémentaires (29) disposés entre lesdits segments de renforcement secondaire et tertiaire (27, 28).
